# FASCICULE DE BREVET EUROPEEN

(11) **EP 0 486 413 B1**
(45) Date de publication et mention de la délivrance du brevet: **22.02.1995**
(21) Numéro de dépôt: 91440088.2
(22) Date de dépôt: 08.11.1991
(51) Int. Cl.: A01B 73/00

(54) **Machine de récolte, notamment faucheuse, pouvant être amenée aisément d'une position de travail dans une position de transport**
Erntemaschine, besonders Mähmaschine, die leicht von einer Arbeitstellung in eine Transportstellung versetzt werden kann
Harvesting machine, especially mower, which can easily be transposed from a work position to a transport position

(30) Priorité: 12.11.1990 FR 9014185
(43) Date de publication de la demande: 20.05.1992
(73) Titulaire: KUHN S.A., F-67700 Saverne (FR)
(72) Inventeur: Ermacora, Rino, F-67700 St Jean Saverne (FR); Wattron, Bernard, F-67700 Haegen (FR)

(56) Documents cités:
- EP-A- 0 161 466
- CA-A- 1 164 222
- FR-A- 2 489 080
- US-A- 3 058 243
- US-A- 4 682 462
- US-A- 4 768 334

## Description

La présente invention concerne une machine de récolte qui comporte :
- un corps s'appuyant sur le sol tant dans la position de travail que dans la position de transport au moyen d'au moins une roue liée directement ou indirectement audit corps au moyen d'une première articulation d'axe dirigé vers le haut, le pivotement de ladite roue autour dudit axe étant condamnable au moyen d'un premier dispositif de verrouillage, et
- un moyen de liaison destiné, au travail au moins, à être lié rigidement à un véhicule moteur auquel le corps est lié à l'aide d'un dispositif de liaison qui comporte une deuxième articulation d'axe dirigé vers le haut, le pivotement du corps autour dudit axe étant condamnable par un deuxième dispositif de verrouillage,
ledit corps pouvant être amené d'une position de travail dans laquelle son axe longitudinal s'étend transversalement à la direction de travail, dans une position de transport dans laquelle son axe longitudinal s'étend au moins sensiblement parallèlement à la direction de transport, de sorte :
- qu'au travail, le deuxième dispositif de verrouillage condamne le pivotement du corps autour de l'axe de la deuxième articulation, tandis que la roue est susceptible de pivoter autour de l'axe de la première articulation, alors
- qu'au transport, le premier dispositif de verrouillage condamne le pivotement de la roue autour de l'axe de la première articulation, tandis que le corps est susceptible de pivoter autour de l'axe de la deuxième articulation.

Il est décrit dans la demande de brevet GB-2 082 436 ou FR-2 489 080, un dispositif de raccordement permettant d'atteler latéralement une ramasseuse à mais à l'attelage trois points arrière d'un tracteur. Ce dispositif de raccordement comporte une pièce de raccordement, liée rigidement au tracteur, ainsi qu'un longeron qui est lié, à l'une de ses extrémités, à ladite pièce de raccordement au moyen d'un axe vertical. A son autre extrémité, le longeron s'appuie sur le sol par l'intermédiaire d'une roue montée pivotante autour d'un axe vertical.

Au travail, le pivotement du longeron par rapport à la pièce de raccordement est condamné au moyen d'un dispositif de verrouillage, tandis que la roue est susceptible de pivoter autour de son axe vertical la liant audit longeron.

A l'opposé, durant le transport, le longeron est susceptible de pivoter autour de l'axe vertical le liant à la pièce de raccordement, tandis que le pivotement de la roue est condamné au moyen d'une goupille.

Compte tenu du fait que la machine s'appuie sur le sol, tant dans sa position de travail que dans sa position de transport au moyen d'au moins une roue, le dispositif d'attelage du tracteur est peu sollicité. Le tracteur est donc plus stable.

Par ailleurs, au transport, la roue fixe et le longeron pivotant par rapport au tracteur, facilitent substantiellement les manoeuvres.

De plus, au travail, le longeron fixe par rapport à la pièce de raccordement, elle-même liée rigidement au tracteur, solidarise le longeron avec le tracteur, ce qui simplifie considérablement les manoeuvres.

Toutefois, cette machine présente un inconvénient. En effet, lorsque l'utilisateur désire amener la roue de sa position de travail dans sa position de transport, manuellement ou en manoeuvrant avec le tracteur, il doit tâtonner pour aboutir avec précision à la position de transport dans laquelle il peut condamner le pivotement de la roue au moyen de la goupille. Etant donné l'importance du poids de la machine, une telle manoeuvre est très contraignante et nécessite un temps relativement long.

La présente invention a pour objectif de remédier à cet inconvénient tout en conservant le double avantage de peu solliciter le dispositif d'attelage du véhicule moteur et de présenter une bonne manoeuvrabilité de la machine, tant au travail qu'au transport.

A cet effet, il est prévu selon l'invention que le premier dispositif de verrouillage comporte un organe d'orientation adapté, en vue du transport, à manoeuvrer et à orienter la roue suivant la direction de transport.

Grâce à cet organe d'orientation, l'orientation de la roue en vue du transport, s'effectue de manière simple et rapide, tout en autorisant au travail le pivotement de la roue autour de son axe la liant au corps.

Selon une caractéristique supplémentaire de la machine de récolte selon l'invention, il est prévu que l'axe de la première articulation soit au moins sensiblement parallèle à l'axe de la deuxième articulation.

Selon une autre caractéristique de l'invention, il est aussi prévu que le dispositif de liaison comporte une articulation supplémentaire d'axe dirigé au moins sensiblement orthogonalement à l'axe de la deuxième articulation et à l'axe longitudinal du corps.

Dans une réalisation avantageuse, il est prévu que l'articulation supplémentaire s'étende entre le corps et la deuxième articulation. Dans une réalisation très intéressante, l'axe de la deuxième articulation et l'axe de l'articulation supplémentaire peuvent être concourants.

Selon une autre caractéristique particulièrement avantageuse de l'invention, il est prévu que le pivotement du corps de sa position de transport vers sa position de travail, autour de l'axe de la deuxième articulation, soit réalisé sous l'action d'un organe de manoeuvre. Cet organe de manoeuvre constitue, en partie au moins, le deuxième dispositif de verrouillage qui peut condamner le pivotement du corps autour de l'axe de la deuxième articulation.

Selon une caractéristique supplémentaire de l'invention, il est prévu que le moyen de liaison soit constitué par une structure d'attelage à trois points d'attelage destinée à être liée aux trois points du dispositif d'attelage d'un véhicule moteur.

La roue, quant à elle, s'étend dans sa position de travail derrière une partie au moins des organes de travail.

Le passage de la roue d'une position de travail dans une position de transport s'effectue au moyen d'un élément de positionnement. Celui-ci positionne la roue, en vue du transport, au moins sensiblement dans le prolongement longitudinal du corps.

L'élément de positionnement pourra être constitué par un bras à l'une des extrémités duquel est liée la roue au moyen de la première articulation, ce bras étant lui-même lié au corps au moyen d'une troisième articulation d'axe dirigé vers le haut.

Dans une réalisation particulièrement intéressante, les axes des première, deuxième et troisième articulations pourront être au moins sensiblement parallèles entre eux. Du reste, l'axe de la troisième articulation, liant le bras de positionnement au corps, pourra s'étendre, en vue de dessus, derrière l'axe longitudinal dudit corps lorsque ce dernier est dans sa position de travail. En particulier, le bras de positionnement pourra former, en vue de dessus, un angle aigu avec l'axe longitudinal du corps lorsque ce dernier est en position de transport et un angle au moins sensiblement droit avec ledit axe longitudinal du corps lorsque ce dernier est en position de travail.

Selon une autre caractéristique très intéressante de l'invention, il est prévu que le pivotement du bras de positionnement de sa position de transport vers sa position de travail, autour de l'axe de la troisième articulation, soit réalisé sous l'action d'un organe de positionnement.

Selon une caractéristique particulièrement intéressante de l'invention, il est prévu qu'un dispositif de commande commande l'organe de manoeuvre et l'organe de positionnement. A cet effet, le dispositif de commande peut comporter deux inverseurs, chacun muni d'un organe de commande respectif. Le premier inverseur est alimenté par un circuit commun et peut occuper deux positions distinctes :
- une première position dans laquelle il alimente le circuit d'alimentation du deuxième inverseur, et
- une deuxième position dans laquelle il alimente le circuit de l'organe de positionnement.
Le deuxième inverseur, quant à lui, peut également occuper deux positions distinctes :
- une première position dans laquelle il alimente le circuit de l'organe de positionnement,
et
- une deuxième position dans laquelle il alimente le circuit de l'organe de manoeuvre.
De plus, il est prévu un premier organe de fin de course pour agir directement ou indirectement sur l'organe de commande du premier inverseur et un deuxième organe de fin de course pour agir directement ou indirectement sur l'organe de commande du deuxième inverseur.

Il va de soi que la partie distribution ou/et la partie commande de chaque inverseur du dispositif de commande, ainsi que l'organe de manoeuvre et l'organe de positionnement pourront être, en partie au moins, électriques, mécaniques, hydrauliques, etc. C'est ainsi notamment qu'il est parfaitement possible d'utiliser des commutateurs en combinaison avec des vérins électriques, des inverseurs hydrauliques à commande électrique, etc.

Le premier organe de fin de course peut, lorsque le corps arrive dans sa position de travail, agir sur l'organe de commande du premier inverseur et placer ledit premier inverseur dans sa deuxième position.

Par ailleurs, lorsque le bras de positionnement quitte sa position de transport, le deuxième organe de fin de course n'agit plus sur l'organe de commande du deuxième inverseur, et le deuxième inverseur se place alors dans sa deuxième position.

Pour ce faire, le deuxième organe de fin de course pourra, dans certaines réalisations, être lié au bras de positionnement. En outre, il est prévu un organe de compensation permettant au bras de positionnement de continuer son déplacement vers la position de transport après que le deuxième organe de fin de course soit en contact avec l'organe de commande du deuxième inverseur. Cet organe de compensation peut être constitué par un organe élastiquement déformable agencé entre le deuxième organe de fin de course et le bras de positionnement.

Selon l'invention, il est prévu que l'organe d'orientation fait partie du premier dispositif de verrouillage destiné à condamner le pivotement de la roue autour de l'axe de la première articulation.

L'organe d'orientation de la roue peut comporter un levier, pivotant autour d'un axe de pivotement, qui présente deux butées s'étendant de part et d'autre de l'axe de pivotement et destinées à venir en contact avec un organe du corps sous l'action d'un organe de positionnement.

Dans ce cas, le contact entre le levier pivotant et l'organe du corps pourra être réalisé au moyen d'un galet tournant autour d'un axe au moins sensiblement parallèle à l'axe de pivotement du levier pivotant.

Avantageusement, l'axe de pivotement du levier pivotant pourra s'étendre au moins sensiblement dans la même direction que l'axe de la première articulation.

En outre, il est prévu dans la réalisation où l'élément de positionnement est constitué par un bras, que l'organe d'orientation de la roue est destiné à venir en contact avec un organe du corps lorsque ledit bras arrive dans sa position de transport.

Selon l'invention, le levier pivotant peut être lié au bras de positionnement dans le voisinage de la troisième articulation liant le bras de positionnement au corps. Ce levier pivotant comporte également un bras auquel est articulée une bielle, elle-même articulée à un bras d'orientation qui est lié à un tourillon dont l'axe longitudinal définit l'axe de la première articulation.

Dans une réalisation particulière de la machine de récolte selon l'invention, il est prévu que l'organe de manoeuvre soit un vérin, celui-ci pouvant être, comme dit précédemment, électrique, pneumatique, hydraulique, etc.

Le vérin de manoeuvre pourra être plus précisément un vérin à double tige ou équivalent. Chaque tige de celui-ci pourra être liée à son extrémité respective, s'étendant au-dehors du cylindre, au moyen de liaison, tandis que le cylindre peut être en liaison d'entraînement avec le corps. De ce fait, le cylindre pourra se translater par rapport au moyen de liaison et entraîner le corps avec lequel ledit cylindre est en liaison. La liaison d'entraînement entre le cylindre du vérin de manoeuvre à double tige et le corps pourra être réalisée au moyen d'une crémaillère liée audit cylindre et engrènant avec un secteur circulaire denté lié au corps et centré sur l'axe de la deuxième articulation.

Selon une caractéristique particulièrement intéressante de l'invention, il est prévu que le vérin de manoeuvre soit un vérin hydraulique. Dans ce cas, le deuxième inverseur peut comporter une boucle qui, dans la première position dudit deuxième inverseur, met en communication les deux chambres du vérin de manoeuvre, autorisant ainsi un pivotement du corps par rapport au moyen de liaison autour de l'axe de la deuxième articulation. De plus, le deuxième dispositif de verrouillage peut comporter un limiteur de pression agencé en parallèle dans le circuit du vérin de manoeuvre au moyen de deux conduites.

Il est aussi prévu que le premier organe de fin de course qui agit sur l'organe de commande du premier inverseur, soit lié au cylindre du vérin de manoeuvre.

Selon une autre caractéristique particulièrement intéressante de l'invention, il est prévu que l'organe de positionnement soit également constitué par au moins un vérin hydraulique. L'invention trouve une application particulièrement avantageuse dans le domaine des faucheuses avec ou sans organes de traitement du produit coupé.

D'autres caractéristiques de l'invention apparaissent dans la description suivante d'un exemple non limitatif de réalisation de l'invention faite en référence au dessin annexé sur lequel :
- la figure 1 représente une vue de dessus d'une machine de récolte selon l'invention liée à un tracteur agricole et placée dans une position de travail ;
- la figure 2 représente une vue arrière de la machine de récolte á sans organes de protection á suivant la flèche II définie sur la figure 1 ;
- la figure 3 représente une vue latérale arrière de la machine de récolte suivant la flèche III définie sur la figure 1 ;
- la figure 4 représente le schéma du câblage hydraulique du dispositif de commande lorsque la machine de récolte est en position de transport ;
- la figure 5 représente une vue de dessus de la machine de récolte placée dans la position de transport ;
- la figure 6 représente le schéma du câblage hydraulique du dispositif de commande lorsque l'action du dispositif de verrouillage de la roue va être neutralisée et lorsque le corps de la machine de récolte est dans une position proche de sa position de transport ;
- la figure 7 représente, en vue de dessus, le dispositif de verrouillage de la roue lorsque son action est neutralisée et lorsque le corps de la machine de récolte est dans une position proche de sa position de transport ;
- la figure 8 représente le schéma du câblage hydraulique du dispositif de commande lorsque le corps de la machine de récolte arrive en position de travail ;
- la figure 9 représente, en vue de dessus, le dispositif de verrouillage de la roue lorsque le corps vient d'être pivoté dans une position de travail ;
- la figure 10 représente le schéma du câblage hydraulique du dispositif de commande lorsque le corps de la machine de récolte est dans une position de travail et lorsque la roue arrive dans une position de travail ;
- la figure 11 représente le schéma du câblage hydraulique du dispositif de commande lorsque le limiteur de pression est déclenché ;
- la figure 12 représente le schéma du câblage hydraulique du dispositif de commande lorsque la roue de la machine de récolte retourne dans une position de transport ;
- la figure 13 représente, en vue de dessus, le dispositif de verrouillage de la roue lorsque la machine de récolte est prête pour le transport.

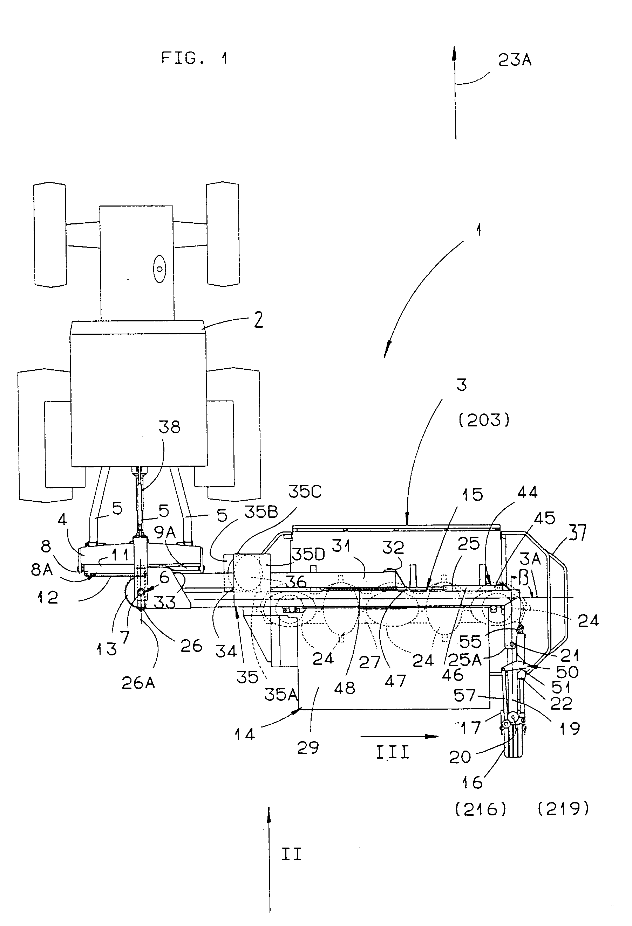

Sur les figures 1 à 3, on voit une faucheuse (1) selon l'invention. Celle-ci est attelée à un tracteur agricole (2).

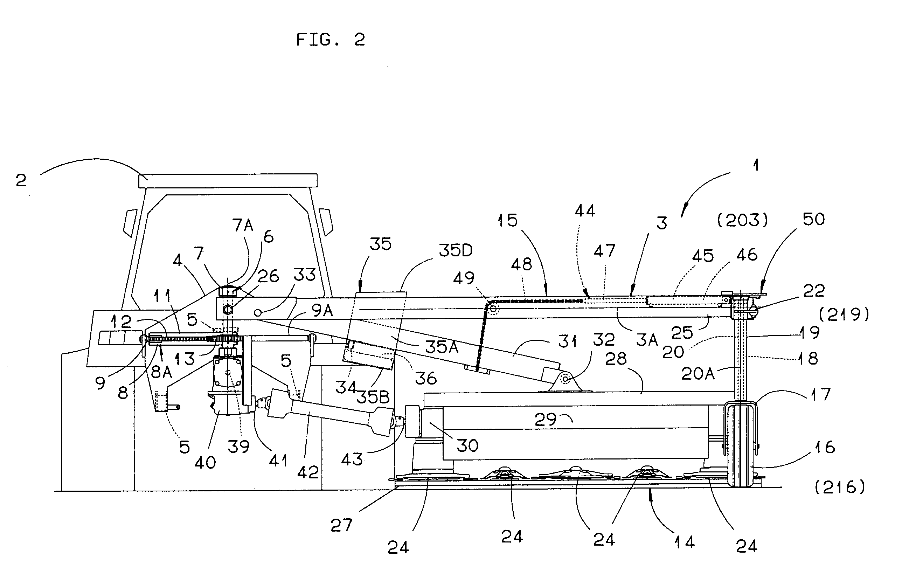

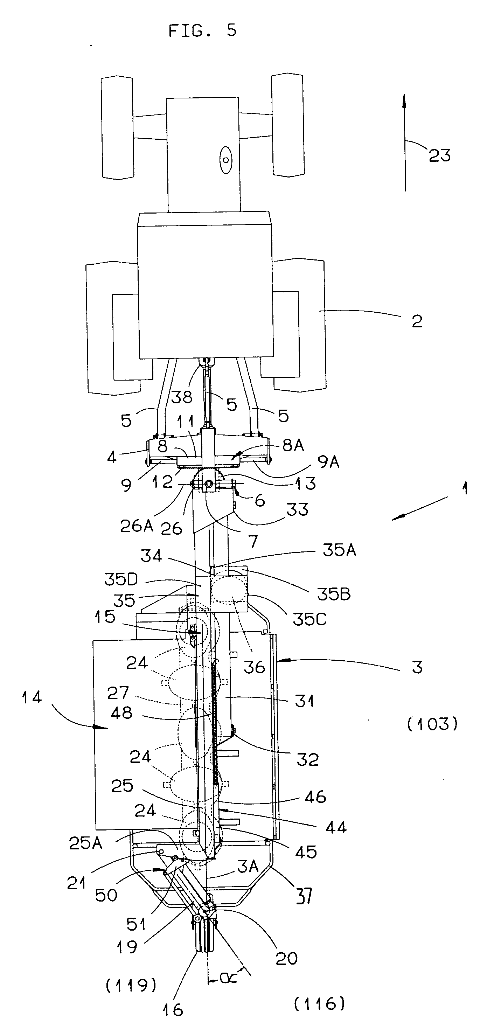

La faucheuse (1) se compose d'un corps (3) et d'une structure d'attelage (4). La structure d'attelage (4) est destinée à être liée, à sa partie frontale, à l'attelage trois points (5) du tracteur agricole (2). Le corps (3), quant à lui, est lié à la structure d'attelage (4) au moyen d'un dispositif de liaison (6) qui comporte notamment une articulation (7). Cette articulation (7) autorise un pivotement du corps (3) autour d'un axe géométrique (7A) (figure 2) au moins sensiblement vertical. La position angulaire du corps (3) par rapport à la structure d'attelage (4) peut être modifiée en faisant pivoter le corps (3) autour de l'axe vertical (7A) du dispositif de liaison (6). La mise dans la position angulaire souhaitée est réalisée par un vérin de manoeuvre (8) et le maintien dans celle-ci s'effectue par un dispositif de verrouillage (8A). Dans cet exemple de réalisation, le dispositif de verrouillage (8A) comporte d'une part le vérin de manoeuvre (8) qui est un vérin hydraulique à double tige (9, 9A), et d'autre part un dispositif de commande (10) - dont la description sera faite ultérieurement - qui alimente notamment ledit vérin (8). Chaque tige (9, 9A) de ce vérin (8) est liée rigidement à son extrémité respective, s'étendant au-dehors du cylindre (11), à la structure d'attelage (4), de sorte à permettre au cylindre (11) dudit vérin (8) de se translater horizontalement sous l'action de l'huile qui l'alimente. Au cylindre (11) est rapportée rigidement une crémaillère (12) qui engrène avec une roue dentée cylindrique (13) dont l'axe de rotation est confondu avec l'axe vertical (7A) du dispositif de liaison (6). De plus, la roue dentée (13) qui tourne autour de l'axe vertical (7A), est liée en rotation avec le corps (3) de la faucheuse (1). De ce fait, le corps (3) peut s'étendre, par pivotement autour de l'axe vertical (7A) réalisé sous l'action du vérin de manoeuvre (8), soit dans une position de travail (203) à côté du tracteur (2) (figures 1 et 2), soit dans une position de transport (103) dans le prolongement du tracteur (2) (figure 5).

Par ailleurs, le corps (3) de la faucheuse (1) comporte un mécanisme de récolte (14) suspendu à un châssis (15). A son extrémité éloignée du dispositif de liaison (6), le châssis (15) s'appuie sur le sol au moyen d'une roue (16) qui roule entre les ailes d'une chape (17).

Sur le dessus de la chape (17) est rapporté rigidement un tourillon (18) dont l'axe longitudinal s'étend vers le haut. Un bras de positionnement (19) en forme de potence creuse comporte, dans sa partie verticale, le tourillon (18). La liaison du tourillon (18) avec le bras de positionnement (19) est réalisée par une articulation (20) de type pivot dont l'axe géométrique (20A) est au moins sensiblement vertical. A son extrémité longitudinale opposée au tourillon (18), le bras de positionnement (19) est lié au châssis (15) au moyen d'une articulation (21). Celle-ci est aussi de type pivot et son axe géométrique (21A) s'étend au moins sensiblement parallèlement à l'axe géométrique (20A) de la précédente liaison pivot (20). De ce fait, la position angulaire du bras de positionnement (19) muni de la roue (16), peut être modifiée en faisant pivoter ledit bras (19) par rapport au châssis (15) autour de l'axe géométrique (21A) de l'articulation (21). Ainsi, le bras de positionnement (19) permet à la roue (16) de tourner partiellement autour de l'extrémité du mécanisme de récolte (14) éloignée du tracteur (2) pour placer ladite roue (16) soit dans la position de transport (116) (figure 5), soit dans la position de travail (216) (figure 1), dans lesquelles elle s'étend derrière le centre de gravité du corps (3) compte tenu de la direction d'avance (23 ou 23A) correspondante. C'est-à-dire que dans sa position de transport (119), le bras de positionnement (19) aligne au moins sensiblement la roue (16) avec le centre de gravité du corps (3) et l'axe vertical (7A) du dispositif de liaison (6), et que dans sa position de travail (219), le bras de positionnement (19) place la roue (16) derrière les organes de coupe (24) de la faucheuse (1). La mise dans la position souhaitée est réalisée au moyen d'un vérin de positionnement hydraulique (22) qui s'étend entre le châssis (15) et le bras de positionnement (19). L'alimentation du vérin (22) et le maintien du bras (19) dans la position angulaire souhaitée sont commandés, comme pour le vérin de manoeuvre (8), par le dispositif de commande (10).

Sur les figures 1, 2 et 5 apparaît également très précisément la forme du châssis (15). Celui-ci se compose pour l'essentiel d'une poutre (25) qui s'étend, au travail, transversalement à la direction d'avance (23A) au travail et, au transport, parallèlement à la direction d'avance (23) au transport. Elle est liée à la structure d'attelage (4) au moyen du dispositif de liaison (6). En plus de l'articulation (7) autorisant un pivotement du corps (3), respectivement du châssis (15), autour de son axe vertical (7A), le dispositif de liaison (6) comporte encore une articulation supplémentaire (26) agencée entre la précédente articulation (7) du dispositif de liaison (6) et le corps (3). L'axe géométrique (26A) de celle-ci est au moins sensiblement horizontal et s'étend orthogonalement à l'axe longitudinal (3A) du corps (3) pour permettre au châssis (15) de pivoter par rapport à la structure d'attelage (4). De plus, cet axe horizontal (26A) est concourant avec l'axe vertical (7A) du dispositif de liaison (6). Un tel agencement permet à la roue (16), respectivement au corps (3) de s'adapter au relief du sol par pivotement du corps (3) autour de cet axe horizontal (26A) du dispositif de liaison (6). En outre, le châssis (15) comporte aussi une console (25A). Celle-ci s'étend transversalement à l'axe longitudinal de la poutre (25) du châssis (15) et est liée à l'extrémité longitudinale de la poutre (25), opposée au dispositif de liaison (6). Du reste, la console (25A) du châssis (15) comporte, à son extrémité libre opposée à la poutre (25), l'articulation (21) liant le bras de positionnement (19) au châssis (15). En vue de dessus, un tel agencement permet au bras de positionnement (19), lorsqu'il est dans sa position de transport (119), de former un angle aigu (α) avec l'axe longitudinal (3A) du corps (3), alors que dans sa position de travail (219), le bras de positionnement (19) forme avec ledit axe longitudinal (3A) un angle (β) au moins sensiblement droit.

Le mécanisme de récolte (14), quant à lui, est connu de l'homme de l'art et s'étend sous le châssis (15) dans une direction transversale à la direction d'avance (23A) au travail. Il se compose pour l'essentiel d'une barre de coupe (27) équipée des organes de coupe (24), d'une structure porteuse (28) (figure 2) à laquelle sont accrochés des organes de traitement (29), et d'un carter d'entrée (30). Le carter d'entrée (30) est lié à l'extrémité longitudinale de la structure porteuse (28) dirigée vers la structure d'attelage (4) et est destiné à entraîner les organes de coupe (24) et les organes de traitement (29). Au-dessus des organes de coupe (24) s'étend au moins sensiblement parallèlement à la barre de coupe (27), la structure porteuse (28) supportant les organes de traitement (29). Ceux-ci sont placés derrière les organes de coupe (24) en vue du traitement du produit coupé par ces derniers. Du reste, la structure porteuse (28) comporte des organes de protection (37) (figures 1 et 5) qui s'étendent autour de la barre de coupe (27) et qui sont destinés à protéger l'utilisateur ou des personnes se trouvant dans le voisinage.

Un bras de suspension (31) suspend le mécanisme de récolte (14) au châssis (15). Dans cette réalisation, le bras de suspension (31) est agencé au-dessus du mécanisme de récolte (14) et s'étend en vue de dessus au moins sensiblement parallèlement à la poutre (25) du châssis (15) et dans le voisinage de cette dernière. A l'une de ses extrémités longitudinales, le bras de suspension (31) est lié à la structure porteuse (28) du mécanisme de récolte (14), dans la partie médiane de celle-ci, au moyen d'une articulation (32) de type pivot. L'axe géométrique de cette articulation (32) s'étend au moins sensiblement dans un plan vertical dirigé suivant la direction d'avance (23A) au travail et contenant le centre des masses du mécanisme de récolte (14). Du reste, ledit axe géométrique est au moins sensiblement dirigé suivant la direction d'avance (23A) au travail. A son autre extrémité longitudinale, le bras de suspension (31) est lié à la poutre (25) du châssis (15) au moyen d'une articulation (33) agencée près de l'articulation (7) d'axe vertical (7A) liant le châssis (15) à la structure d'attelage (4). Cette articulation (33) est de type pivot et son axe géométrique est également dirigé au moins sensiblement suivant la direction d'avance (23A) au travail. De ce fait, le bras de suspension (31) autorise uniquement un déplacement du mécanisme de récolte (14) en hauteur, ainsi qu'un pivotement dudit mécanisme de récolte (14) par rapport au châssis (15) autour d'une direction au moins sensiblement parallèle à la direction d'avance (23A) au travail. Grâce à ce bras de suspension (31), le mécanisme de récolte (14) peut s'adapter aux configurations du terrain et passer par-dessus les obstacles que peut présenter celui-ci.

Sur les figures 1 et 2, on voit également que le bras de suspension (31) est muni d'un galet (34). Ce dernier est agencé entre les deux articulations (32, 33) du bras de suspension (31) et son axe de rotation coupe au moins sensiblement l'axe géométrique de l'articulation (33) liant le bras de suspension (31) au châssis (15). Le galet (34) s'étend plus précisément entre le bras de suspension (31) et la poutre (25) du châssis (15), de sorte à s'appuyer, par l'intermédiaire d'un support (35) contre ladite poutre (25). Grâce à ce galet (34), l'effort qui s'oppose au glissement du mécanisme de récolte (14) sur le sol est transmis, en partie au moins, par le galet (34) au châssis (15). De ce fait, le bras de suspension (31) peut suivre les déplacements en hauteur du mécanisme de récolte (14), l'articulation (33) étant soulagée dans n'importe quelle position dudit bras (31).

Dans cet exemple de réalisation, le support (35) est agencé dans le voisinage de la partie médiane du bras de suspension (31) et comporte quatre parties planes (35A, 35B, 35C, 35D) dont la première (35A) est liée à la face latérale antérieure de la poutre (25) du châssis (15) et contre laquelle vient s'appuyer le galet (34). La deuxième partie (35B) de ce support (35) s'étend approximativement parallèlement sous le bras de suspension (31). La troisième partie (35C), quant à elle, s'étend vers le haut devant le bras de suspension (31) par rapport à la direction d'avance (23A) au travail, de sorte à former un "U" avec les parties précédentes (35A, 35B). La quatrième partie (35D), quant à elle, s'étend horizontalement et est liée à la face supérieure de la poutre (25) du châssis (15). De ce fait, lors des déplacements en hauteur du mécanisme de récolte (14), le bras de suspension (31) se déplace à l'intérieur du support (35), tandis que le galet (34) s'appuie contre la première partie (35A) dudit support (35).

Un ressort à gaz (36), dont la structure apparaît sur les figures 1, 2 et 5, est agencé entre le bras de suspension (31) et la deuxième partie (35B) du support (35), qui s'étend sous le bras de suspension (31). De cette façon, le ressort à gaz (36) supporte, par l'intermédiaire du bras de suspension (31), une partie du poids du mécanisme de récolte (14).

L'entraînement du mécanisme de récolte (14) est réalisé à partir de la prise de force (non représentée) du tracteur (2), qui attaque, par l'intermédiaire d'un arbre télescopique à joints universels (38), l'arbre d'entrée (39) (figure 2) d'un dispositif de transmission de mouvement (40). L'arbre de sortie (41) du dispositif de transmission de mouvement (40), qui pivote avec le corps (3) autour de l'axe vertical (7A) de l'articulation (7), est toujours orienté au moins sensiblement parallèlement à l'axe longitudinal (3A) du corps (3) et entraîne, par l'intermédiaire d'un autre arbre télescopique à joints universels (42), l'arbre d'entrée (43) du carter d'entrée (30) du mécanisme de récolte (14). L'arbre d'entrée (43) est également orienté au moins sensiblement parallèlement à l'axe longitudinal (3A) du corps (3).

Tel que visible sur les figures 1, 2 et 5, la faucheuse (1) comporte encore un dispositif de relevage (44) du mécanisme de récolte (14). Ce dispositif de relevage (44) se compose principalement d'un vérin de relevage (45) dont le cylindre (46) est lié au châssis (15) et dont la tige (47) est liée à une chaîne (48). Cette chaîne (48) s'enroule partiellement sur une roue (49) (figure 2), guidée en rotation dans le châssis (15), et est liée à son extrémité éloignée du vérin de relevage (45) au bras de suspension (31). Au travail, lorsque la tige (47) est sortie, la chaîne (48) est détendue et peut se déformer librement, de sorte que le dispositif de relevage (44) ne gêne pas le déplacement en hauteur du mécanisme de récolte (14) par rapport au châssis (15). Lorsque le mécanisme de récolte (14) doit être relevé, il suffira de faire rentrer la tige (47) dans le cylindre (46) du vérin de relevage (45) en injectant de l'huile dans celui-ci. Ce faisant, la tige (47) tire, via la chaîne (48), sur le bras de suspension (31), ce qui a pour effet de pivoter ledit bras (31) par rapport au châssis (15) et de faire monter le mécanisme de récolte (14).

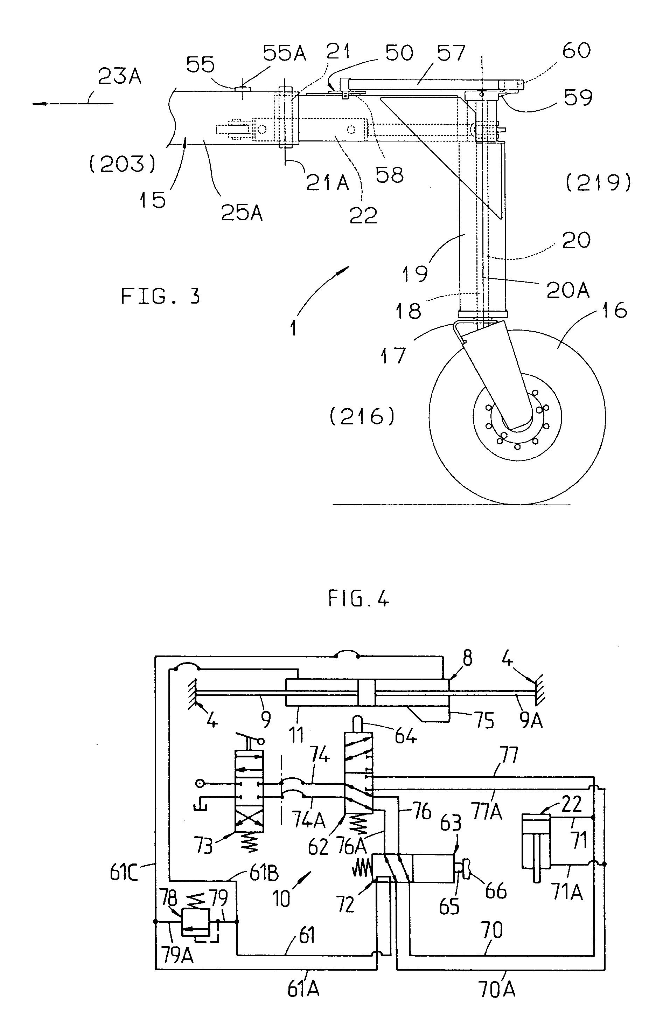

Sur les figures 3, 7, 9 et 13, il apparaît en particulier que le bras de positionnement (19) supporte un dispositif de verrouillage (50) de la roue (16) qui comporte, dans cet exemple de réalisation, un organe d'orientation et de verrouillage (51). Ce dernier est un levier pivotant (52) lié au bras de positionnement (19) au moyen d'une articulation (53) agencée dans le voisinage de l'articulation (21) liant le bras de positionnement (19) au châssis (15). L'axe géométrique (53A) de cette articulation (53) s'étend au moins sensiblement parallèlement à l'axe (20A) de l'articulation (20) liant la roue (16) au bras de positionnement (19). De part et d'autre de l'articulation (53), le levier pivotant (52) présente deux butées (54, 54A) qui sont destinées, lorsque le bras de positionnement (19) retourne dans sa position de transport (119), à venir en contact avec la console (25A) du châssis (15). A cet effet, la console (25A) du châssis (15) est munie d'un galet (55) tournant autour d'un axe géométrique (55A) au moins sensiblement parallèle à l'axe de pivotement (53A) du levier pivotant (52), et avec lequel l'une (54) des butées (54, 54A) du levier pivotant (53) vient en contact. A son autre extrémité, le levier pivotant (52) comporte un bras (56) auquel est liée une bielle (57) au moyen d'une articulation (58) d'axe géométrique parallèle à l'axe géométrique (53A) de l'articulation (53). En vue latérale (figure 3), la bielle (57) s'étend approximativement parallèlement à la partie horizontale du bras de positionnement (19) et est liée à un bras d'orientation (59) au moyen d'une articulation (60) d'axe géométrique également parallèle à l'axe géométrique (53A) de l'articulation (53). Ce bras d'orientation (59) est lié rigidement, mais de manière démontable, au tourillon (18) qui permet le pivotement de la roue (16). Grâce à cet agencement, la position angulaire de la roue (16) est fonction de la position angulaire des butées (54, 54A) du levier pivotant (52), par l'intermédiaire du bras (56) du levier pivotant (52), de la bielle (57) et du bras d'orientation (59). De cette façon, lorsque le bras de positionnement (19) arrive en position de transport (119), les butées (54, 54A) du levier pivotant (52) viennent s'orienter contre la console (25A) du châssis (15) et placent ainsi la roue (16) dans la direction d'avance (23) au transport (figures 5 et 13).

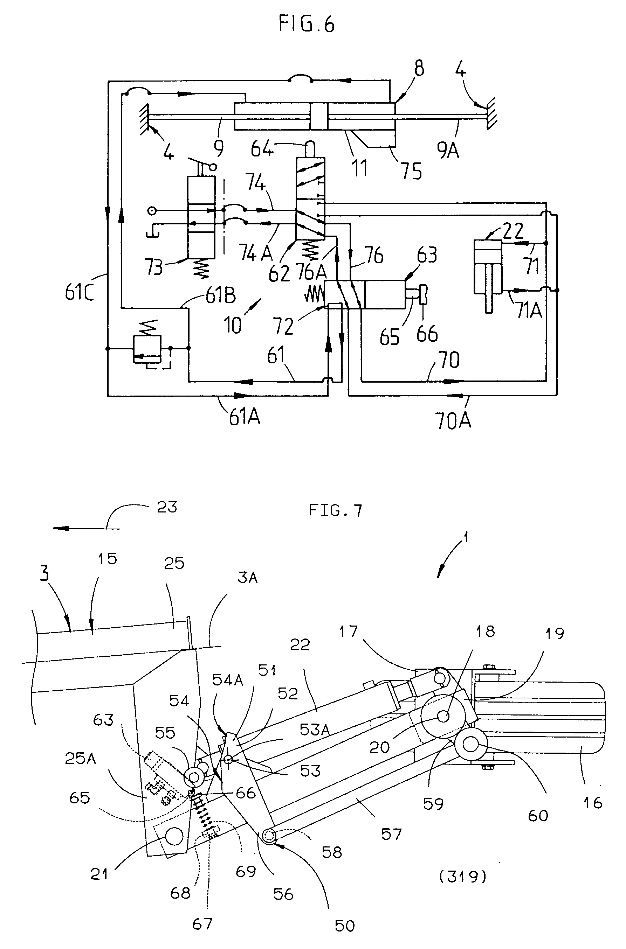

A l'inverse, il apparaît sur la figure 7 que lorsque le bras de positionnement se trouve dans une position intermédiaire (319) proche de sa position de transport (119), les butées (54, 54A) du levier pivotant (52) ne sont plus en mesure d'atteindre le galet (55) ni le châssis (15). De ce fait, le levier pivotant (52) et la roue (16) peuvent pivoter autour de leur axe vertical (53A, 20A) respectif, ce qui permet à la roue (16) de s'orienter automatiquement en fonction de son déplacement.

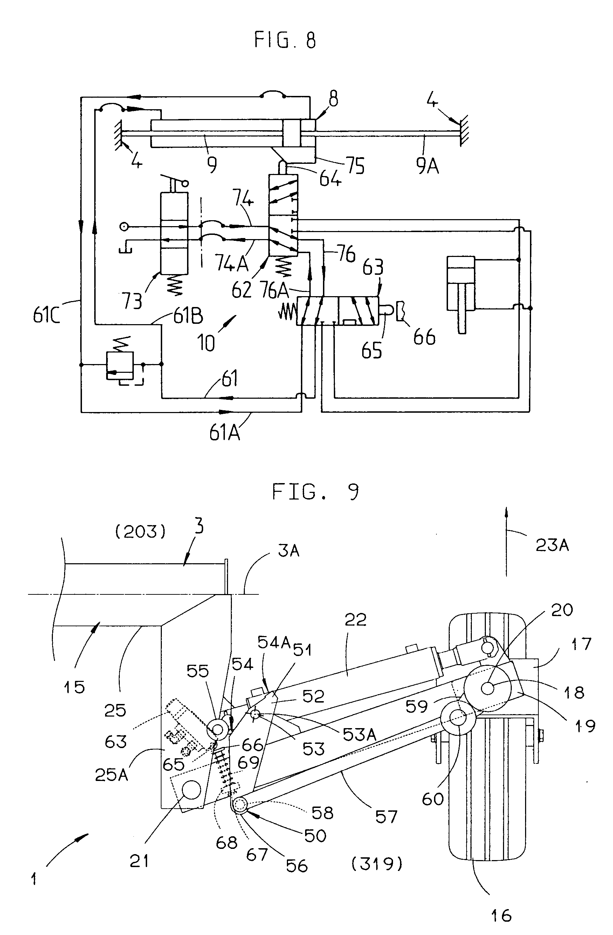

Sur les figures 4, 6, 8, 10, 11 et 12 apparaît le câblage hydraulique du dispositif de commande (10). On voit en particulier sur la figure 4, que l'huile est amenée au vérin de manoeuvre (8) par deux paires de conduites successives (61, 61A, 61B, 61C) qui constituent le circuit d'alimentation du vérin de manoeuvre (8). L'huile qui alimente ce circuit (61, 61A, 61B, 61C) est distribuée par le dispositif de commande (10). Celui-ci comporte deux inverseurs (62, 63) dont le premier (62) est lié à la structure d'attelage (4) et dont le deuxième (63) est lié au corps (3) de la machine (1). Chaque inverseur (62, 63) est commandé par un organe de commande (64, 65) correspondant représenté par un poussoir dans l'exemple décrit. Le premier inverseur (62) qui est lié à la structure d'attelage (4), s'étend plus précisément dans le voisinage du vérin de manoeuvre (8). Le deuxième inverseur (63), quant à lui, est lié à la console (25A) du châssis (15), de sorte que son organe de commande (65) puisse, notamment au transport, être actionné par un organe de fin de course (66) lié au bras de positionnement (19) (figure 13). A cet effet, l'organe de fin de course (66) est fixé rigidement à l'extrémité longitudinale d'une tige (67) dirigée, au transport, vers l'organe de commande (65) correspondant. Cette tige (67) est liée au bras de positionnement (19) au moyen d'une articulation cylindrique (68) de type pivot glissant autorisant notamment une translation de ladite tige (67) par rapport au bras de positionnement (19). Un ressort (69), agencé entre le bras de positionnement (19) et l'organe de fin de course (66) permet, en se déformant élastiquement, au bras de positionnement (19) de continuer son déplacement de sa position intermédiaire (319) vers sa position de transport (119) après que l'organe de fin de course (66) soit en contact avec l'organe de commande (65) du deuxième inverseur (63). Entre la position intermédiaire (319) et la position de travail (219) du bras de positionnement (19), l'organe de commande (65) du deuxième inverseur (63) n'est pas actionné par l'organe de fin de course (66) et, comme dit précédemment, la roue (16) peut pivoter autour de l'axe géométrique (20A). Si l'organe de commande (65) du deuxième inverseur (63) n'est pas actionné (figures 8 à 11), l'huile est distribuée au circuit (61, 61A, 61B, 61C) du vérin de manoeuvre (8) décrit précédemment.

Si au contraire l'organe de commande (65) est actionné par l'organe de fin de course (66), l'huile est distribuée par le deuxième inverseur (63) au circuit du vérin de positionnement (22). Ce circuit comporte notamment deux paires de conduites (70, 70A, 71,71A) qui véhiculent l'huile entre le deuxième inverseur (63) et le vérin de positionnement (22). Pour ce faire, la première paire de conduites (70, 70A) amène l'huile du deuxième inverseur (63) à la deuxième paire de conduites (71, 71A) dont l'une (71) et raccordée à la grande chambre du vérin de positionnement (22) et dont l'autre (71A) est raccordée à la petite chambre de ce même vérin (22). En outre, il apparaît également sur la figure 4 que le deuxième inverseur (63) comporte une boucle (72) qui permet, lorsque l'organe de commande (65) est actionné, de mettre en communication les deux conduites (61, 61A) du circuit du vérin de manoeuvre (8). C'est-à-dire que l'huile des deux chambres du vérin de manoeuvre (8) à double tige (9, 9A) peut circuler librement d'une chambre à l'autre. Cet agencement très avantageux autorise, lors du transport, le pivotement du corps (3) par rapport à la structure d'attelage (4) autour de l'axe vertical (7A) du dispositif de liaison (6). Comme la roue (16) est directrice au transport, le pivotement du corps (3) permet de réduire considérablement le rayon de braquage durant les manoeuvres de transport.

Sur la figure 4 apparaît également le premier inverseur (62). L'alimentation de cet inverseur (62) s'effectue à partir d'un distributeur hydraulique (73) de type 4/3 appartenant au tracteur (2). Un circuit commun d'alimentation, constitué d'une paire de conduites (74, 74A) transmet l'huile du distributeur (73) au premier inverseur (62). L'organe de commande (64) de cet inverseur (62) peut être actionné par un organe de fin de course (75) qui est lié au cylindre (11) du vérin de manoeuvre (8). Cet organe de commande(64) est actionné lorsque le corps (3) de la machine (1) arrive dans sa position de travail (203). Dans tous les autres cas, l'organe de commande (64) n'est pas actionné par l'organe de fin de course (75) correspondant. Si l'organe de commande (64) de cet inverseur (62) n'est pas actionné, l'huile est distribuée par ce même inverseur (62) à un circuit qui alimente le deuxième inverseur (63). Ce circuit d'alimentation est constitué de deux conduites (76, 76A) qui viennent se raccorder à l'entrée du deuxième inverseur (63) afin de lui amener l'huile distribuée par le premier inverseur (62).

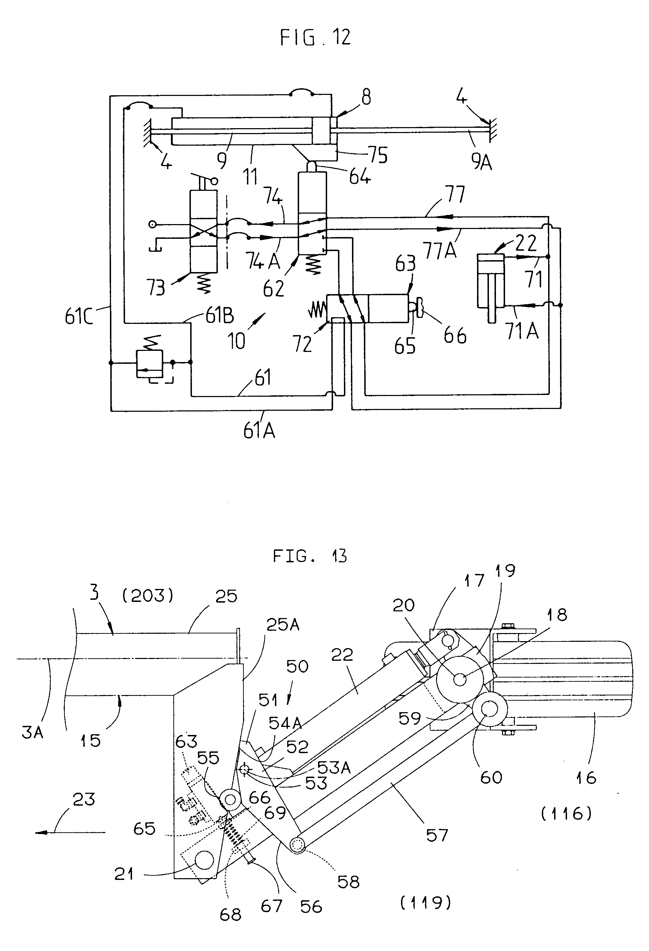

Si au contraire l'organe de commande (64) est actionné par l'organe de fin de course (75) correspondant, l'huile est distribuée par le premier inverseur (62) au circuit du vérin de positionnement (22) (figure 12). Dans ce cas, l'huile est distribuée à une paire de conduites (77, 77A) qui est montée en parallèle avec les deux autres paires de conduites (70, 70A, 71, 71A) de ce circuit du vérin de positionnement (22) et qui amène l'huile jusqu'à la jonction desdites autres paires de conduites (70, 70A, 71, 71A). Ensuite, la paire de conduites (71, 71A) transmet l'huile au vérin de positionnement (22).

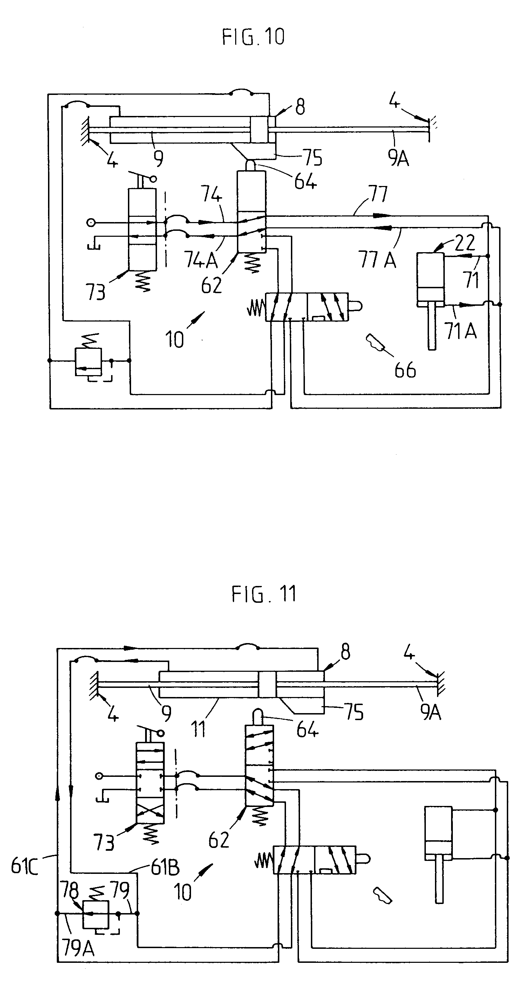

Sur la figure 4 apparaît également un limiteur de pression (78). Une paire de conduites (79, 79A) dont la première (79) se raccorde à la jonction de la conduite (61) avec la conduite (61B), et la deuxième (79A) se raccorde à la jonction de la conduite (61A) avec la conduite (61C), amène l'huile au limiteur de pression (78). Ce dernier n'intervient pas lors de l'utilisation normale de la machine (1). C'est uniquement lorsque la pression de l'huile s'élève anormalement dans la première conduite (79), que le limiteur de pression (78) permet à l'huile de s'écouler par la deuxième conduite (79A) (figure 11).

Comme visible sur les figures 1 et 5, la longueur du corps (3) de la machine (1) est nettement plus grande que sa largeur. Comme de surcroît, le corps (3) s'étend, au travail, à côté du tracteur (2), il est impossible de transporter la machine (1) lorsqu'elle se trouve en position de travail. Il est donc nécessaire de transposer la machine (1), de sorte que la dimension la plus longue de son corps (3) s'étende parallèlement à la direction de transport (23). Pour ce faire, la machine (1) doit subir des transformations dont le procédé fait l'objet de la présente invention.

Les figures 6 à 10 visualisent le procédé de transformation de la machine (1) selon l'invention, pour l'amener de la position de transport dans la position de travail.

La première phase est représentée sur les figures 6 et 7. Elle consiste à neutraliser l'action du dispositif de verrouillage (50) de la roue (16), de sorte à permettre un pivotement de ladite roue (16) autour de l'axe (20A) dirigé vers le haut. Pour ce faire, l'utilisateur commande, par l'intermédiaire du distributeur (73) appartenant au tracteur (2), la sortie de la tige du vérin de positionnement (22) qui provoque le léger pivotement du bras de positionnement (19) de sa position de transport (119) vers sa position intermédiaire (319) par rapport au corps (3) de la machine (1). C'est-à-dire que ce distributeur (73) est actionné de telle sorte que le tracteur (2) alimente la grande chambre du vérin de positionnement (22) au travers de la conduite (74), du premier inverseur (62), de la conduite (76), du deuxième inverseur (63), de la conduite (70) et de la conduite (71). L'huile contenue dans la petite chambre du vérin de positionnement (22), quant à elle, retourne au tracteur (2), au travers de la conduite (71A), de la conduite (70A), du deuxième inverseur (63), de la conduite (76A), du premier inverseur (62) et de la conduite (74A). Sous l'action du pivotement de l'organe de positionnement, la roue (16) recule et le corps (3) commence légèrement à pivoter -autour de l'axe vertical (7A) du dispositif de liaison (6)-vers sa position de travail (203). La roue dentée (13) qui est liée en rotation avec le corps (3), engrène avec la crémaillère (12) du vérin de manoeuvre (8) et translate quelque peu le cylindre (11) dudit vérin de manoeuvre (8). Ce faisant, une partie de l'huile contenue dans la chambre de la deuxième tige (9A) du vérin de manoeuvre (8) est refoulée vers la chambre de la première tige (9), au travers de la conduite (61C), de la conduite (61A), de la boucle (72), de la conduite (61) et de la conduite (61B). Lorsque le bras de positionnement (19) atteint sa position intermédiaire (319), les butées (54, 54A) du levier pivotant (52) ne sont plus en mesure d'atteindre le châssis (15) (figures 7 et 8) et l'organe de fin de course (66) correspondant cesse d'actionner l'organe de commande (65) du deuxième inverseur (63). Le tiroir de ce dernier change alors de position, ce qui interrompt l'alimentation en huile du vérin de positionnement (22) et immobilise le bras de positionnement (19) dans sa position intermédiaire (319). Comme dans cette position, le levier pivotant (52) ne peut plus atteindre le châssis (15), la roue (16) peut pivoter autour de l'axe vertical (20A).

La deuxième phase est représentée sur les figures 8 et 9. Elle consiste à réaliser le pivotement du corps (3) qui a quelque peu débuté avec la phase de neutralisation du dispositif de verrouillage (50) de la roue (16), afin d'amener celui-ci dans sa position de travail (203). Pour ce faire, le deuxième inverseur (63) - dont le tiroir vient de changer automatiquement de position - commande maintenant le déplacement du cylindre (11) du vérin de manoeuvre (8) pour provoquer, via la crémaillère (12) et la roue dentée (13), le pivotement du corps (3) de sa position de transport (103) vers sa position de travail (203). A cet effet, l'alimentation du vérin de manoeuvre (8) se fait au travers de la conduite (74), du premier inverseur (62), de la conduite (76), du deuxième inverseur (63), de la conduite (61) et de la conduite (61B). L'huile contenue dans l'autre chambre du vérin de manoeuvre (8) retourne au tracteur (2) au travers de la conduite (61C), de la conduite (61A), du deuxième inverseur (63), de la conduite (76A), du premier inverseur (62) et de la conduite (74A). Ce faisant, le corps (3) pivote par rapport à la structure d'attelage (4) autour de l'axe vertical (7A) du dispositif de liaison (6) vers sa position de travail (203). Lorsque le corps (3) arrive dans sa position de travail (203) (figures 1, 2, 9 et 10), l'organe de fin de course (75) du vérin de manoeuvre (8) actionne l'organe de commande (64) du premier inverseur (62). Le tiroir de ce dernier change alors de position, ce qui interrompt l'alimentation en huile du vérin de manoeuvre (8) et immobilise le corps (3) dans sa position de travail (203).

La dernière phase est représentée sur les figures 1, 2, 3 et 10. Elle consiste à amener, par l'intermédiaire du bras de positionnement (19), la roue (16) dans sa position de travail (216). Pour ce faire, le premier inverseur (62) - dont le tiroir vient de changer automatiquement de position-commande à nouveau la sortie de la tige du vérin de positionnement (22) qui provoque le pivotement du bras de positionnement (19) de sa position intermédiaire (319) vers sa position de travail (219). L'alimentation de la grande chambre de ce vérin (22) se fait au travers de la conduite (74), du premier inverseur (62), de la conduite (77) et de la conduite (71). L'huile contenue dans la petite chambre retourne au tracteur (2) au travers de la conduite (71A), de la conduite (77A), du premier inverseur (62) et de la conduite (74A). Ce faisant, le bras de positionnement (19) pivote jusque dans sa position de travail (219). Celle-ci est atteinte lorsque, par exemple, la tige du vérin de positionnement (19) est sortie au maximum du cylindre dudit vérin (22). La machine (1) est alors prête pour le travail.

La figure 11 visualise le fonctionnement du limiteur de pression (78). Celui-ci ne sert qu'au travail et est sollicité notamment lorsque le corps (3) rencontre un obstacle. Dans ce cas, le corps (3) a tendance à pivoter vers l'arrière par rapport à la direction d'avance (23A) au travail, ce qui augmente, via la roue dentée (13) et la crémaillère (12), la pression de l'huile contenue dans la chambre du vérin de manoeuvre (8) traversée par la première tige (9), ainsi que dans la conduite (61B) et dans la conduite (79). Dès que la valeur de la pression de l'huile est supérieure à la valeur à laquelle est taré le limiteur de pression (78), celui-ci devient passant. Ainsi, l'huile en surpression amenée de ladite chambre du vérin de manoeuvre (8) au travers de la conduite (61B) et de la conduite (79), peut alors s'écouler vers l'autre chambre du vérin de manoeuvre (8) contenant la deuxième tige (9A) au travers du limiteur de pression (78), de la conduite (79A) et de la conduite (61C). Ce faisant, le corps (3) pivote vers l'arrière autour de l'axe vertical (7A) du dispositif de liaison (6) par rapport à la structure d'attelage (4). Pour continuer le travail, il suffit ensuite de dégager la machine (1) et d'alimenter le vérin de manoeuvre (8), de sorte à replacer le corps (3) dans sa position de travail (203).

Lorsque l'utilisateur veut replacer la machine (1) de la position de travail dans la position de transport, il lui suffit de commander, par l'intermédiaire du distributeur (73) appartenant au tracteur (2), la rentrée de la tige du vérin de positionnement (22) (figures 12 et 13). C'est-à-dire que le distributeur (73) est actionné de telle sorte que le tracteur (2) alimente la petite chambre du vérin de positionnement (22) au travers de la conduite (74A), du premier inverseur (62), de la conduite (77A) et de la conduite (71A). L'huile contenue dans la grande chambre de ce vérin (22) retourne au tracteur (2) au travers de la conduite (71), de la conduite (77), du premier inverseur (62) et de la conduite (74). Ce faisant, le bras de positionnement (19) pivote de sa position de travail (219) jusque dans sa position de transport (119), où le dispositif de verrouillage (50) oriente et maintient la roue (16) dans la direction d'avance (23) au transport. Dans cette position, l'organe de fin de course (66) correspondant actionne l'organe de commande (65) du deuxième inverseur (63) qui met en communication, par l'intermédiaire de la boucle (72) et des conduites (61, 61A, 61B, 61C), les deux chambres du vérin de manoeuvre (8). C'est-à-dire que le corps (3) peut ainsi pivoter autour de l'axe vertical (7A) du dispositif de liaison (6). La machine (1) est alors prête pour le transport (figures 4, 5 et 13).

Bien que cela n'ait pas été évoqué, il va de soi que les inverseurs (62, 63) retournent dans leur position neutre lorsqu'ils ne sont pas actionnés et ce, de manière connue, au moyen d'un ressort respectif intégré auxdits inverseurs (62, 63).

Finalement, différentes modifications restent possibles, notamment en ce qui concerne la constitution des divers éléments ou par substitution d'équivalents techniques, sans pour autant sortir du domaine de protection défini dans les revendications.

## Revendications

1. Machine de récolte (1) comportant :
- un corps (3) s'appuyant sur le sol tant dans la position de travail (203) que dans la position de transport (103) au moyen d'au moins une roue (16) liée directement ou indirectement audit corps (3) au moyen d'une première articulation (20) d'axe (20A) dirigé vers le haut, le pivotement de ladite roue (16) autour dudit axe (20A) étant condamnable au moyen d'un premier dispositif de verrouillage (50),
et
- un moyen de liaison (4) destiné, au travail au moins, à être lié rigidement à un véhicule moteur (2), auquel le corps (3) est lié à l'aide d'un dispositif de liaison (6) qui comporte une deuxième articulation (7) d'axe (7A) dirigé vers le haut, le pivotement du corps (3) autour dudit axe (7A) étant condamnable par un deuxième dispositif de verrouillage (8A),
ledit corps (3) pouvant être amené d'une position de travail (203) dans laquelle son axe longitudinal (3A) s'étend transversalement à la direction de travail (23A), dans une position de transport (103) dans laquelle son axe longitudinal (3A) s'étend au moins sensiblement parallèlement à la direction de transport (23), de sorte :
* qu'au travail, le deuxième dispositif de verrouillage (8A) condamne le pivotement du corps (3) autour de l'axe (7A) de la deuxième articulation (7), tandis que la roue (16) est susceptible de pivoter autour de l'axe (20A) de la première articulation (20), alors
* qu'au transport, le premier dispositif de verrouillage (50) condamne le pivotement de la roue (16) autour de l'axe (20A) de la première articulation (20), tandis que le corps (3) est susceptible de pivoter autour de l'axe (7A) de la deuxième articulation (7),
caractérisée par le fait que le premier dispositif de verrouillage (50) comporte un organe d'orientation (51) adapté, en vue du transport, à manoeuvrer et à orienter la roue (16) suivant la direction de transport (23).

2. Machine de récolte selon la revendication 1, caractérisée par le fait que l'axe (20A) de la première articulation (20) est au moins sensiblement parallèle à l'axe (7A) de la deuxième articulation (7).

3. Machine de récolte selon la revendication 1 ou 2, caractérisée par le fait que le dispositif de liaison (6) comporte une articulation supplémentaire (26) d'axe (26A) dirigé au moins sensiblement orthogonalement à l'axe (7A) de la deuxième articulation (7) et à l'axe longitudinal (3A) du corps (3)

4. Machine de récolte selon la revendication 3, caractérisée par le fait que l'axe (7A) de la deuxième articulation (7) et l'axe (26A) de l'articulation supplémentaire (26) sont concourants.

5. Machine de récolte selon la revendication 3 ou 4, caractérisée par le fait que l'articulation supplémentaire (26) est prévue entre le corps (3) et la deuxième articulation (7).

6. Machine de récolte selon l'une au moins des revendications 1 à 5, caractérisée par le fait que le pivotement du corps (3) de sa position de transport (103) vers sa position de travail (203), autour de l'axe (7A) de la deuxième articulation (7), est réalisé sous l'action d'un organe de manoeuvre (8).

7. Machine de récolte selon la revendication 6, caractérisée par le fait que le deuxième dispositif de verrouillage (8A) est, en partie, au moins constitué par l'organe de manoeuvre (8).

8. Machine de récolte selon l'une au moins des revendications 1 à 7, caractérisée par le fait que le moyen de liaison (4) est constitué par une structure d'attelage à trois points d'attelage destinée à être liée aux trois points (5) du dispositif d'attelage d'un véhicule moteur (2).

9. Machine de récolte selon l'une au moins des revendications 1 à 8, caractérisée par le fait que dans sa position de travail (216), la roue (16) s'étend derrière une partie au moins des organes de travail (24).

10. Machine de récolte selon l'une au moins des revendications 1 à 9, caractérisée par le fait qu'il est prévu un élément de positionnement (19) destiné à amener la roue (16) d'une position de travail (216) dans une position de transport (116).

11. Machine de récolte selon la revendication 10, caractérisée par le fait que l'élément de positionnement (19) positionne la roue (16), en vue du transport, au moins sensiblement dans le prolongement longitudinal du corps (3).

12. Machine de récolte selon la revendication 10 ou 11, caractérisée par le fait que l'élément de positionnement (19) est constitué par un bras à l'une des extrémités duquel est liée la roue (16) au moyen de la première articulation (20), ledit bras étant lui-même lié au corps (3) au moyen d'une troisième articulation (21) d'axe (21A) dirigé vers le haut.

13. Machine de récolte selon la revendication 12, caractérisée par le fait que les axes (20A, 7A, 21A) des première, deuxième, et troisième articulations (20, 7, 21) sont au moins sensiblement parallèles entre eux.

14. Machine de récolte selon la revendication 12 ou 13, caractérisée par le fait que l'axe (21A) de la troisième articulation (21), liant le bras de positionnement (19) au corps (3), s'étend, en vue de dessus, derrière l'axe longitudinal (3A) dudit corps (3) lorsque ce dernier est dans sa position de travail (203).

15. Machine de récolte selon la revendication 14, caractérisée par le fait que le bras de positionnement (19) forme, en vue de dessus, un angle aigu (α) avec l'axe longitudinal (3A) du corps (3) lorsque ce dernier est en position de transport (103), et un angle (β) au moins sensiblement droit avec ledit axe longitudinal (3A) du corps (3) lorsque ce dernier est en position de travail (203).

16. Machine de récolte selon l'une au moins des revendications 12 à 15, caractérisée par le fait que le pivotement du bras de positionnement (19), de sa position de transport (119) vers sa position de travail (219), autour de l'axe (21A) de la troisième articulation (21) est réalisé sous l'action d'un organe de positionnement (22).

17. Machine de récolte selon les revendications 6 et 16, caractérisée par le fait qu'un dispositif de commande (10) commande l'organe de manoeuvre (8) et l'organe de positionnement (22).

18. Machine de récolte selon la revendication 17, caractérisée par le fait que le dispositif de commande (10) comporte deux inverseurs (62, 63) chacun muni d'un organe de commande (64, 65) respectif, un premier inverseur (62) étant alimenté par un circuit commun (74, 74A) et pouvant occuper deux positions distinctes :
- une première position dans laquelle il alimente le circuit d'alimentation (76, 76A) du deuxième inverseur (63),
et
- une deuxième position dans laquelle il alimente le circuit (77, 77A, 71, 71A) de l'organe de positionnement (22),
le deuxième inverseur (63), quant à lui, pouvant également occuper deux positions distinctes :
- une première position dans laquelle il alimente le circuit (70, 70A, 71, 71A) de l'organe de positionnement (22),
et
- une deuxième position dans laquelle il alimente le circuit (61, 61A, 61B, 61C) de l'organe de manoeuvre (8),
un premier organe de fin de course (75) étant prévu pour agir directement ou indirectement sur l'organe de commande (64) du premier inverseur (62) et un deuxième organe de fin de course (66) étant prévu pour agir directement ou indirectement sur l'organe de commande (65) du deuxième inverseur (63).

19. Machine de récolte selon la revendication 18, caractérisée par le fait que lorsque le corps (3) arrive dans sa position de travail (203), le premier organe de fin de course (75) agit sur l'organe de commande (64) du premier inverseur (62) et place ledit premier inverseur (62) dans sa deuxième position.

20. Machine de récolte selon la revendication 18 ou 19, caractérisée par le fait que lorsque le bras de positionnement (19) quitte sa position de transport (119), le deuxième organe de fin de course (66) n'agit plus sur l'organe de commande (65) du deuxième inverseur (63) qui se place alors dans sa deuxième position.

21. Machine de récolte selon la revendication 20, caractérisée par le fait que le deuxième organe de fin de course (66) est lié au bras de positionnement (19) et qu'il est prévu un organe de compensation (69) permettant au bras de positionnement (19) de continuer son déplacement vers la position de transport (119) après que le deuxième organe de fin de course (66) soit en contact avec l'organe de commande (65) du deuxième inverseur (63).

22. Machine de récolte selon la revendication 21, caractérisée par le fait que l'organe de compensation (69) est constitué par un organe élastiquement déformable agencé entre le deuxième organe de fin de course (66) et le bras de positionnement (19).

23. Machine de récolte selon l'une au moins des revendications 1 à 22, caractérisée par le fait que l'organe d'orientation (51) de la roue (16) comporte un levier (52), pivotant autour d'un axe de pivotement (53A), qui présente deux butées (54, 54A) s'étendant de part et d'autre de l'axe de pivotement (53A) et destinées à venir en contact avec un organe (25A) du corps (3) sous l'action d'un organe de positionnement (22).

24. Machine de récolte selon la revendication 23, caractérisée par le fait que le contact entre le levier pivotant (52) et l'organe (25A) du corps (3) est réalisé au moyen d'un galet (55) tournant autour d'un axe (55A) au moins sensiblement parallèle à l'axe de pivotement (53A) du levier pivotant (52).

25. Machine de récolte selon la revendication 23 ou 24 caractérisée par le fait que l'axe de pivotement (53A) du levier pivotant (52) s'étend au moins sensiblement dans la même direction que l'axe (20A) de la première articulation (20).

26. Machine de récolte selon l'une au moins des revendications 12 à 16 prise en combinaison avec l'une au moins des revendications 23 à 25, caractérisée par le fait que ledit organe d'orientation (51) de la roue (16) est destiné à venir en contact avec un organe (25A) du corps (3) lorsque le bras de positionnement (19) arrive dans sa position de transport (119).

27. Machine de récolte selon l'une au moins des revendications 23 à 26, caractérisée par le fait que le levier pivotant (52) est lié au bras de positionnement (19).

28. Machine de récolte selon la revendication 27, caractérisée par le fait que le levier pivotant (52) est lié au bras de positionnement (19) dans le voisinage de la troisième articulation (21).

29. Machine de récolte selon la revendication 27 ou 28, caractérisée par le fait que le levier pivotant (52) comporte un bras (56) auquel est articulée une bielle (57), elle-même articulée à un bras d'orientation (59) qui est lié à un tourillon (18) dont l'axe longitudinal définit l'axe (20A) de la première articulation (20).

30. Machine de récolte selon la revendication 6, caractérisée par le fait que ledit organe de manoeuvre (8) est constitué par au moins un vérin.

31. Machine de récolte selon la revendication 30, caractérisée par le fait que le vérin de manoeuvre (8) est un vérin à double tige (9, 9A) ou équivalent.

32. Machine de récolte selon la revendication 31, caractérisée par le fait que chaque tige (9, 9A) du vérin de manoeuvre (8) est liée, à son extrémité respective s'étendant au-dehors du cylindre (11), au moyen de liaison (4), et ledit cylindre (11) est en liaison d'entraînement avec le corps (3).

33. Machine de récolte selon la revendication 32, caractérisée par le fait que la liaison d'entraînement entre le cylindre (11) du vérin de manoeuvre (8) à double tige (9, 9A) et le corps (3) est réalisée au moyen d'une crémaillère (12) liée audit cylindre (11), qui engrène avec un secteur circulaire denté (13) lié au corps (3) et centré sur l'axe (7A) de la deuxième articulation (7).

34. Machine de récolte selon l'une au moins des revendications 31 à 33, caractérisée par le fait que le vérin de manoeuvre (8) est un vérin hydraulique.

35. Machine de récolte selon la revendication 34 et l'une au moins des revendications 18 à 22, caractérisée par le fait que le deuxième inverseur (63) comporte une boucle (72) qui, dans la première position dudit deuxième inverseur (63), met en communication les deux chambres du vérin de manoeuvre (8), autorisant ainsi un pivotement du corps (3) par rapport au moyen de liaison (4) autour de l'axe (7A) de la deuxième articulation (7).

36. Machine de récolte selon la revendication 35, caractérisée par le fait que le deuxième dispositif de verrouillage (8A) comporte un limiteur de pression (78) agencé en parallèle dans le circuit (61, 61A, 61B, 61C) du vérin de manoeuvre (8) au moyen de deux conduites (79, 79A).

37. Machine de récolte selon l'une au moins des revendications 31 à 36 et l'une au moins des revendications 18 à 22, caractérisée par le fait que le premier organe de fin de course (75) est lié au cylindre (11) du vérin de manoeuvre (8).

38. Machine de récolte selon la revendication 16, caractérisée par le fait que l'organe de positionnement (22) est constitué par au moins un vérin hydraulique.

39. Machine de récolte selon l'une au moins des revendications 1 à 38, caractérisée par le fait que c'est une faucheuse avec ou sans organes de traitement du produit coupé.

## Claims

1. A harvesting machine (1) comprising :
- a body (3) which rests on the ground both in the working position (203) and in the transport position (103) by means of at least one wheel (16) connected directly or indirectly to the said body (3) by means of a first joint (20) with its axis (20A) directed upwardly, the pivoting of the said wheel (16) about the said axis (20A) being lockable by means of a first locking means (50),
and
- a connecting means (4) intended, at least during work, to be rigidly connected to a motor vehicle (2), to which the body (3) is connected with the aid of a connecting device (6) which comprises a second joint (7) with its axis (7A) directed upwardly, the pivoting of the body (3) about the said axis (7A) being lockable by means of a second locking means (8A),
the said body (3) being able to be moved from a working position (203) in which its longitudinal axis (3A) extends transversely to the direction of work (23A), to a transport position (103) in which its longitudinal axis (3A) extends at least approximately parallel to the direction of transport (23), in such a way:
* that during work, the second locking means (8A) locks the pivoting of the body (3) about the axis (7A) of the second joint (7), while the wheel (16) is capable of pivoting about the axis (20A) of the first joint (20), and
* that during transport, the first locking means (50) locks the pivoting of the wheel (16) about the axis (20A) of the first joint (20), while the body (3) is capable of pivoting about the axis (7A) of the second joint (7),
characterised by the fact that the first locking means (50) comprises an orientation element (51) adapted with a view to transport, to manoeuvre and to orient the wheel (16) following the direction of transport (23).

2. A harvesting machine in accordance with claim 1, characterised by the fact that the axis (20A) of the first joint (20) is at least approximately parallel to the axis (7A) of the second joint (7).

3. A harvesting machine in accordance with claim 1 or 2, characterised by the fact that the connecting device (6) comprises a supplementary joint (26) with its axis (26A) directed at least approximately orthogonally to the axis (7A) of the second joint (7) and to the longitudinal axis (3A) of the body (3).

4. A harvesting machine in accordance with claim 3, characterised by the fact that the axis (7A) of the second joint (7) and the axis (26A) of the supplementary joint (26) are concurrent.

5. A harvesting machine in accordance with claim 3 or 4, characterised by the fact that the supplementary joint (26) is foreseen between the body (3) and the second joint (7).

6. A harvesting machine in accordance with at least one of claims 1 to 5, characterised by the fact that the pivoting of the body (3) from its transport position (103) to its work position (203), about the axis (7A) of the second joint (7), is achieved by the action of a manoeuvring device (8).

7. A harvesting machine in accordance with claim 6, characterised by the fact that the second locking means (8A) is at least in part constituted by the manoeuvring device (8).

8. A harvesting machine in accordance with at least one of claims 1 to 7, characterised by the fact that the connecting means (4) is constituted by a hitching structure with three hitching points intended to be connected to the three points (5) of the hitching device of a motor vehicle (2).

9. A harvesting machine in accordance with at least one of claims 1 to 8, characterised by the fact that in its work position (216), the wheel (16) extends behind one part at least of the working elements (24).

10. A harvesting machine in accordance with at least one of claims 1 to 9, characterised by the fact that a positioning element (19) is foreseen, which is intended to bring the wheel (16) from a work position (216) to a transport position (116).

11. A harvesting machine in accordance with claim 10, characterised by the fact that the positioning element (19) positions the wheel (16), with a view to transport, at least approximately in the longitudinal prolongation of the body (3).

12. A harvesting machine in accordance with claim 10 or claim 11, characterised by the fact that the positioning element (19) is constituted by an arm, to one end of which the wheel (16) is connected by means of the first joint (20), the said arm being itself connected to the body (3) by means of a third joint (21) with its axis (21A) directed upwardly.

13. A harvesting machine in accordance with claim 12, characterised by the fact that the axes (20A, 7A, 21A) of the first, second and third joints (20, 7, 21) at least approximately parallel to each other.

14. A harvesting machine in accordance with claim 12 or claim 13, characterised by the fact that the axis (21A) of the third joint (21), connecting the positioning aim (19) to the body (3), extends when seen from above behind the longitudinal axis (3A) of the said body (3) when this latter is in its work position (203).

15. A harvesting machine in accordance with claim 14, characterised by the fact that the positioning arm (19) forms, when seen from above, an acute angle (α) with the longitudinal axis (3A) of the body (3) when this latter is in its transport position (103), and an at least approximately right angle (β) with the said longitudinal axis (3A) of the body (3) when this latter is in its work position (203).

16. A harvesting machine in accordance with at least one of claims 12 to 15, characterised by the fact that the pivoting of the positioning arm (19) from its transport position (119) to its work position (219), about the axis (21A) of the third joint (21), is achieved by the action of a positioning device (22).

17. A harvesting machine in accordance with claims 6 and 16, characterised by the fact that a control means (10) controls the manoeuvring device (8) and the positioning device (22).

18. A harvesting machine in accordance with claim 17, characterised by the fact that the control means (10) comprises two inverters (62, 63) each having a respective control element (64, 65), a first inverter (62) being fed by a common circuit (74, 74A) and being capable of occupying two distinct positions :
- a first position in which it supplies the supply circuit (76, 76A) of the second inverter (63),
and
- a second position in which it supplies the circuit (77, 77A, 71, 71A) of the positioning device (22), whereas the second inverter (63) being also capable of occupying two distinct positions :
- a first position in which it supplies the circuit (70, 70A, 71, 71A) of the positioning device (22),
and
- a second position in which it supplies the circuit (61, 61A, 61B, 61C) of the manoeuvring device (8),
a first travel end element (75) being provided to act directly or indirectly on the control element (64) of the first inverter (62) and a second travel end element (66) being provided to act directly or indirectly on the control element (65) of the second inverter (63).

19. A harvesting machine in accordance with claim 18, characterised by the fact that when the body (3) reaches its work position (203), the first travel end element (75) acts on the control element (64) of the first inverter (62) and places the said first inverter (62) in its second position.

20. A harvesting machine in accordance with claim 18 or 19, characterised by the fact that when the positioning aim (19) leaves its transport position (119) the second travel end element (66) ceases to act on the control element (65) of the second inverter (63) which then takes up its second position.

21. A harvesting machine in accordance with claim 20, characterised by the fact that the second travel end element (66) is connected to the positioning arm (19) and in that a compensating element (69) is provided to permit the positioning aim (19) to continue its movement towards the transport position (119) after the second travel end element (66) is in contact with the control element (65) of the second inverter (63).

22. A harvesting machine in accordance with claim 21, characterised by the fact that the compensating element (69) is constituted by an elastically deformable element arranged between the second travel end element (66) and the positioning arm (19).

23. A harvesting machine in accordance with at least one of claims 1 to 22, characterised by the fact that the orientation element (51) of the wheel (16) comprises a lever (52), pivoting about a pivot axis (53A), which presents two abutments (54, 54A) extending on both sides of the pivot axis (53A) and intended to come into contact with an element (25A) of the body (3) by the action of a positioning device (22).

24. A harvesting machine in accordance with claim 23, characterised by the fact that the contact between the pivoting element (52) and the element (25A) of the body (3) is achieved by means of a roller (55) rotating about an axis (55A) at least approximately parallel to the pivot axis (53A) of the pivoting lever (52).

25. A harvesting machine in accordance with claim 23 or 24, characterised by the fact that the pivot axis (53A) of the pivoting lever (52) extends at least approximately in the same direction as the axis (20A) of the first joint (20).

26. A harvesting machine in accordance with at least one of claims 12 to 16 taken in combination with at least one of claims 23 to 25, characterised by the fact that the said orientation element (51) of the wheel (16) is intended to come into contact with an element (25A) of the body (3) when the positioning arm (19) reaches its transport position (119).

27. A harvesting machine in accordance with at least one of claims 23 to 26, characterised by the fact that the pivoting lever (52) is connected to the positioning arm (19).

28. A harvesting machine in accordance with claim 27, characterised by the fact that the pivoting lever (52) is connected to the positioning arm (19) in the vicinity of the third joint (21).

29. A harvesting machine in accordance with claim 27 or 28, characterised by the fact that the pivoting lever (52) comprises an arm (56) on which is articulated a link (57), itself articulated on an orientation arm (59) which is connected to a pin (18) whose longitudinal axis defines the axis (20A) of the first joint (20).

30. A harvesting machine in accordance with claim 6, characterised by the fact that the said manoeuvring device (8) is constituted by at least one jack.

31. A harvesting machine in accordance with claim 30, characterised by the fact that the manoeuvring jack (8) is a double rod (9, 9A) jack or equivalent.

32. A harvesting machine in accordance with claim 31, characterised by the fact that each rod (9, 9A) of the manoeuvring jack (8) is connected, at its respective end extending out of the cylinder (11), to the connecting means (4), and the said cylinder (11) is in driving connection with the body (3).

33. A harvesting machine in accordance with claim 32, characterised by the fact that the driving connection between the cylinder (11) of the manoeuvring jack (8) with a double rod (9, 9A) and the body (3) is achieved by means of a rack (12) connected to the said cylinder (11), which meshes with a toothed circular sector (13) connected to the body (3) and centred on the axis (7) of the second joint (7A).

34. A harvesting machine in accordance with at least one of claims 31 to 33, characterised by the fact that the manoeuvring jack (8) is a hydraulic jack.

35. A harvesting machine in accordance with claim 34 and at least one of claims 18 to 22, characterised by the fact that the second inverter (63) comprises a loop (72) which, in the first position of the said second inverter (63), provides communication between the two chambers of the manoeuvring jack (8), thus allowing a pivoting of the body (3) relative to the connecting means (4) about the axis (7A) of the second joint (7).

36. A harvesting machine in accordance with claim 35, characterised by the fact that the second locking means (8A) comprises a pressure limiter (78) acting in parallel in the circuit (61, 61A, 61B, 61C) of the manoeuvring jack (8) by means of two pipes (79, 79A).

37. A harvesting machine in accordance with at least one of claims 31 to 36 and at least one of claims 18 to 22, characterised by the fact that the first travel end element (75) is connected to the cylinder (11) of the manoeuvring jack (8).

38. A harvesting machine in accordance with claim 16, characterised by the fact that the positioning device (22) is constituted by at least one hydraulic jack.

39. A harvesting machine in accordance with at least one of claims 1 to 38, characterised by the fact that it is a mower with or without elements for treatment of the cut product.

## Patentansprüche

1. Erntemaschine (1) umfassend :
- einen Körper (3), der sich auf dem Boden sowohl in der Arbeitsstellung (203) als auch in der Transportstellung (103) mittels mindestens eines Rades (16) abstützt, das direkt oder indirekt mit dem Körper (3) mittels einer ersten Gelenkverbindung (20) mit einer nach oben gerichteten Achse (20A) verbunden ist, wobei die Schwenkung des Rades (16) um die Achse (20A) mittels einer ersten Verriegelungsvorrichtung (50) sperrbar
ist, und
- ein Verbindungsmittel (4), das zumindest bei der Arbeit dazu bestimmt ist, mit einem Motorfahrzeug (2) fest verbunden zu werden, und mit welchem der Körper (3) mit Hilfe einer Verbindungsvorrichtung (6) verbunden ist, die eine zweite Gelenkverbindung (7) mit einer nach oben gerichteten Achse (7A) aufweist, wobei die Schwenkung des Körpers (3) um die Achse (7A) durch eine zweite Verriegelungsvorrichtung (8A)sperrbar ist,
welcher Körper (3) von einer Arbeitsstellung (203), in der sich seine Länsachse (3A) quer zur Arbeitsrichtung (23A) erstreckt, in eine Transportstellung (103), in der sich seine Längsachse (3A) zumindest im wesentlichen parallel zur Transportrichtung (23) erstreckt, derart verstellt werden kann, dass :
* bei der Arbeit die zweite Verriegelungsvorrichtung (8A) die Schwenkung des Körpers (3) um die Achse (7A) der zweiten Gelenkverbindung (7) sperrt, während das Rad (16) um die Achse (20A) der ersten Gelenkverbindung (20) Schwenkbar ist, und
* das beim Transport die erste Verriegelungsvorrichtung (50) die Schwenkung des Rades (3) um die Achse (20A) der ersten Gelenkverbindung (20) sperrt, während der Körper (3) um die Achse (7A) der zweite Gelenkverbindung (7) schwenkbar ist,
dadurch gekennzeichnet, daß die erste Verriegelungsvorrichtung (50) ein Orientierungsorgan (51) aufweist, das für den Transport dazu geeignet ist, das Rad (16) zu betätigen und in die Transportrichtung zu orientieren.

2. Erntemaschine nach Anspruch 1, dadurch gekennzeichnet, daß die Achse (20A) der ersten Gelenkverbindung (20) zumindest im wesentlichen parallel zur Achse (7A) der zweiten Gelenkverbindung (7) ist.

3. Erntemaschine nach Anspruch 1 oder 2, dadurch gekennzeichnet, daß die Verbindungsvorrichtung (6) eine Zusatzgelenkverbindung (26) mit einer Achse (26A) umfaßt, die zumindest im wesentlichen rechtwinkelig zur Achse (7A) der zweiten Gelenkverbindung (7) und zur Längsachse (3A) des Körpers (3) ausgerichtet ist.

4. Erntemaschine nach Anspruch 3, dadurch gekennzeichnet, daß die Achse (7A) der zweiten Gelenkverbindung (7) und die Achse (26A) der Zusatzgelenkverbindung (26) sich schneiden.

5. Erntemaschine nach Anspruch 3 oder 4, dadurch gekennzeichnet, daß die Zusatzgelenkverbindung (26) zwischen dem Körper (3) und der zweiten Gelenkverbindung (7) vorgesehen ist.

6. Erntemaschine nach mindestens einem der Ansprüche 1 bis 5, dadurch gekennzeichnet, daß die Schwenkung des Körpers (3) von seiner Transportstellung (103) in seine Arbeitsstellung (203) um die Achse (7A) der zweiten Gelenkverbindung (7) unter Einwirkung eines Betätigungsorgans (8) erfolgt.

7. Erntemaschine nach Anspruch 6, dadurch gekennzeichnet, daß die zweite Verriegelungsvorrichtung (8A) zumindest zum Teil aus dem Betätigungsorgan (8) besteht.

8. Erntemaschine nach mindestens einem der Ansprüche 1 bis 7, dadurch gekennzeichnet, daß das Verbindungsmittel (4) aus einem Dreipunktanhänggestell besteht, das an die drei Punkten (5) der Anhängevorrichtung eines Motorfahrzeuges (2) verbindbar ist.

9. Erntemaschine nach mindestens einem der Ansprüche 1 bis 8, dadurch gekennzeichnet, daß sich das Rad (16) in seiner Arbeitsstellung (216) zumindest hinter einem Teil der Arbeitsorgane (24) erstreckt.

10. Erntemaschine nach mindestens einem der Ansprüche 1 bis 9, dadurch gekennzeichnet, daß ein Positionierelement (19) vorgesehen ist, das dazu bestimmt ist, das Rad (16) von einer Arbeitsstellung (216) in eine Transportstellung (116) zu führen.

11. Erntemaschine nach Anspruch 10, dadurch gekennzeichnet, daß das Positionierelement (19) das Rad (16) für den Transport zumindest im wesentlichen in der Längsverlängerung des Körpers (3) positioniert.

12. Erntemaschine nach Anspruch 10 oder 11, dadurch gekennzeichnet, daß das Positionierelement (19) aus einem Arm besteht, von dem eines der Enden mit dem Rad (16) mittels der ersten Gelenkverbindung (20) verbunden ist, wobei der Arm selbst mit dem Körper (3) mittels einer dritten Gelenkverbindung (21) mit einer nach oben gerichteten Achse (21 A) verbunden ist.

13. Erntemaschine nach Anspruch 12, dadurch gekennzeichnet, daß die Achsen (20A, 7A, 21A) der ersten, zweiten und dritten Gelenkverbindungen (20, 7, 21) zumindest im wesentlichen parallel zueinander sind.

14. Erntemaschine nach Anspruch 12 oder 13, dadurch gekennzeichnet, daß die Achse (21A) der dritten Gelenkverbindung (21), die den Positionierarm (19) mit dem Körper (3) verbindet, sich in Draufsicht hinter der Längsachse (3A) des Körpers (3) erstreckt, wenn letzterer in seiner Arbeitsstellung (203) ist.

15. Erntemaschine nach Anspruch 14, dadurch gekennzeichnet, daß der Positionierarm (19) in Draufsicht einen spitzen Winkel (α) mit der Längsachse (3A) des Körpers (3) wenn letzterer in Transportstellung (103) ist, und einen zumindest im wesentlichen rechten Winkel (β) mit der Längsachse (3A) des Körpers (3) bildet, wenn letzterer in Arbeitsstellung (203) ist.

16. Erntemaschine nach mindestens einem der Ansprüche 12 bis 15, dadurch gekennzeichnet, daß die Schwenkung des Positionierarmes (19) von seiner Transportstellung (119) in seine Arbeitsstellung (219) um die Achse (21A) der dritten Gelenkverbindung (21) unter Einwirkung eines Positionierorgans (22) erfolgt.

17. Erntemaschine nach den Ansprüchen 6 und 16, dadurch gekennzeichnet, daß eine Steuervorrichtung (10) das Betätigungsorgan (8) und das Positionierorgan (22) steuert.

18. Erntemaschine nach Anspruch 17, dadurch gekennzeichnet, daß die Steuervorrichtung (10) zwei Umschalter (62, 63) umfaßt, von denen jeder mit einem entsprechenden Steuerorgan (64, 65) versehen ist, wobei ein erster Umschalter (62) durch einen gemeinsamen Kreis (74, 74A) gespeist wird und zwei Stellungen einnehmen kann:
- eine erste Stellung, in der er den Speiseleitungskreis (76, 76A) des zweiten Umschalters (63) speist,
und
- eine zweite Stellung, in der er den Leitungskreis (77, 77A, 71, 71A) des Positionierorgans (22) speist,
und wobei der zweite Umschalter (63) seinerseits ebenfalls zwei bestimmte Stellungen einnehmen kann:
- eine erste Stellung, in der er den Leitungskreis (70, 70A, 71, 71A) des Positionierorgans (22) speist,
und
- eine zweite Stellung, in der er den Leitungskreis (61, 61A, 61B, 61C) des Betätigungsorgans (8) speist,
wobei ein erstes Endstellungsorgan (75) vorgesehen ist, um direkt oder indirekt auf das Steuerorgan (64) des ersten Umschalters (62) einzuwirken und ein zweites Endstellungsorgan (66) vorgesehen ist, um direkt oder indirekt auf das Steuerorgan (65) des zweiten Umschalters (63) einzuwirken.

19. Erntemaschine nach Anspruch 18, dadurch gekennzeichnet, daß, wenn der Körper (3) in seine Arbeitsstellung (203) gelangt, das erste Endstellungsorgan (75) auf das Steuerorgan (64) des ersten Umschalters (62) einwirkt und den ersten Umschalter (62) in seine zweite Stellung bringt.

20. Erntemaschine nach Anspruch 18 oder 19, dadurch gekennzeichnet, daß, wenn der Positionierarm (19) seine Transportstellung (119) verläßt, das zweite Endstellungsorgan (66) nicht mehr auf das Steuerorgan (65) des zweiten Umschalters (63) einwirkt, der dann in seine zweite Stellung verstellt wird.

21. Erntemaschine nach Anspruch 20, dadurch gekennzeichnet, daß das zweite Endstellungsorgan (66) mit dem Positionierarm (19) verbunden ist und daß ein Ausgleichsorgan (69) vorgesehen ist, das dem Positionierarm (19) ermöglicht, seine Versetzung in die Transportstellung (119) fortzusetzen, nachdem das zweite Endstellungsorgan (66) mit dem Steuerorgan (65) des zweiten Umschalters (63) in Kontakt gekommen ist.

22. Erntemaschine nach Anspruch 21, dadurch gekennzeichnet, daß das Ausgleichsorgan (69) aus einem elastisch deformierbaren Organ besteht, das zwischen dem zweiten Endstellungsorgan (66) und dem Positionierarm (19) angeordnet ist.

23. Erntemaschine nach mindestens einem der Ansprüche 1 bis 22, dadurch gekennzeichnet, daß das Orientierungsorgan (51) des Rades (16) einen Hebel (52) umfaßt, der um eine Schwenkachse (53A) schwenkt, und der zwei Anschläge (54, 54A) aufweist, die sich beidseits der Schwenkachse (53A) erstrecken und dazu bestimmt sind, mit einem Organ (25A) des Körpers (3) unter Einwirkung eines Positionierorgans (22) in Kontakt zu kommen.

24. Erntemaschine nach Anspruch 23, dadurch gekennzeichnet, daß der Kontakt zwischen dem Schwenkhebel (52) und dem Organ (25A) des Körpers (3) mittels einer Rolle (55) hergestellt ist, die um eine zumindest im wesentlichen zur Schwenkachse (53A) des Schwenkhebels (52) parallele Achse (55A) dreht.

25. Erntemaschine nach Anspruch 23 oder 24, dadurch gekennzeichnet, daß die Schwenkachse (53A) des Schwenkhebels (52) sich zumindest im wesentlichen in der gleichen Richtung erstreckt wie die Achse (20A) der ersten Gelenkverbindung (20).

26. Erntemaschine nach mindestens einem der Ansprüche 12 bis 16 in Kombination mit mindestens einem der Ansprüche 23 bis 25, dadurch gekennzeichnet, daß das Orientierungsorgan (51) des Rades (16) dazu bestimmt ist, in Kontakt mit einem Organ (25A) des Körpers (3) zu kommen, wenn der Positionierarm (19) in seine Transportstellung (119) gelangt.

27. Erntemaschine nach mindestens einem der Ansprüche 23 bis 26, dadurch gekennzeichnet, daß der Schwenkhebel (52) mit dem Positionierarm (19) verbunden ist.

28. Erntemaschine nach Anspruch 27, dadurch gekennzeichnet, daß der Schwenkhebel (52) mit dem Positionierarm (19) in der Nähe der dritten Gelenkverbindung (21) verbunden ist.

29. Erntemaschine nach Anspruch 27 oder 28, dadurch gekennzeichnet, daß der Schwenkhebel (52) einen Arm (56) umfaßt, an dem eine Lenkstange (57) angelenkt ist, die selbst an einem Orientierungsarm (59) angelenkt ist, der mit einem Zapfen (18) verbunden ist, dessen Längsachse die Achse (20A) der ersten Gelenkverbindung (20) definiert.

30. Erntemaschine nach Anspruch 6, dadurch gekennzeichnet, daß das Betätigungsorgan (8) aus mindestens einem Zylinder besteht.

31. Erntemaschine nach Anspruch 30, dadurch gekennzeichnet, daß der Betätigungszylinder (8) ein Zylinder mit einer Doppelstange (9, 9A) oder dgl. ist.

32. Erntemaschine nach Anspruch 31, dadurch gekennzeichnet, daß jede Stange (9, 9A) des Betätigungszylinders (8) an ihrem entsprechenden, sich außerhalb des Zylinders (11) erstreckenden Ende mit dem Verbindungsmittel (4) verbunden ist und der Zylinder (11) mit dem Körper (3) in Antriebsverbindung steht.

33. Erntemaschine nach Anspruch 32, dadurch gekennzeichnet, daß die Antriebsverbindung zwischen dem Zylinder (11) des Betätigungszylinders (8) mit der Doppelstange (9, 9A) und dem Körper (3) mittels einer Zahnstange (12) hergestellt ist, die mit dem Zylinder (11) verbunden ist und mit einem Zahnbogensegment (13) in Eingriff steht, das mit dem Körper (3) verbunden und auf der Achse (7A) der zweiten Gelenkverbindung (7) zentriert ist.

34. Erntemaschine nach mindestens einem der Ansprüche 31 bis 33, dadurch gekennzeichnet, daß der Betätigungszylinder (8) ein Hydraulikzylinder ist.

35. Erntemaschine nach Anspruch 34 und mindestens einem der Ansprüche 18 bis 22, dadurch gekennzeichnet, daß der zweite Umschalter (63) eine Schleife (72) umfaßt, die in der ersten Stellung des zweiten Umschalters (63) die zwei Kammern des Betätigungszylinders (8) verbindet, um so eine Schwenkung des Körpers (3) in bezug auf das Verbindungsmittel (4) um die Achse (7A) der zweiten Gelenkverbindung (7) zuzulassen.

36. Erntemaschine nach Anspruch 35, dadurch gekennzeichnet, daß die zweite Verriegelungsvorrichtung (8A) einen Druckbegrenzer (78) umfaßt, der parallel im Leitungskreis (61, 61A, 61B, 61C) des Betätigungszylinders (8) mittels zweier Leitungen (79, 79A) angeordnet ist.

37. Erntemaschine nach mindestens einem der Ansprüche 31 bis 36 und mindestens einem der Ansprüche 18 bis 22, dadurch gekennzeichnet, daß das erste Endstellungsorgan (75) mit dem Zylinder (11) des Betätigungszylinders (8) verbunden ist.

38. Erntemaschine nach Anspruch 16 dadurch gekennzeichnet, daß das Positionierorgan (22) aus mindestens einem Hydraulikzylinder besteht.

39. Erntemaschine nach mindestens einem der Ansprüche 1 bis 38, dadurch gekennzeichnet, daß sie eine Mähmaschine mit oder ohne Behandlungsorgane(n) für das Schnittgut ist.
